# EUROPEAN PATENT APPLICATION

(11) **EP 2 254 381 A1**
(43) Date of publication of application: **24.11.2010**
(21) Application number: 10005323.0
(22) Date of filing: 21.05.2010
(51) Int. Cl.: H04W 72/04, H04W 36/00, H04W 76/04, H04L 5/00

(54) **Method and apparatus for measurement gap configuration in a carrier component of a carrier aggregation system**

(30) Priority: 21.05.2009 US 180137 P
(71) Applicant: Innovative Sonic Corporation, Neihu District Taipei City (TW)
(72) Inventor: Kuo, Richard Lee-Chee, Peitou, Taipei City (TW)
(74) Representative: Hager, Thomas Johannes

(57) **Abstract**

A method for measurement gap configuration in a network of a wireless communication system is disclosed. The method includes steps of configuring a plurality of component carriers, which may contain uplink component carriers and downlink component carriers, to a UE in the wireless communication system (402), and indicating the UE to associate a first downlink component carrier of the plurality of component carriers with a measurement gap when the measurement gap is configured (404).

## Description

The present invention relates to a method and apparatus for measurement gap configuration in a wireless communication system according to the pre-characterizing clauses of claims 1, 2, 11 and 12.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, based on handover requirements and for the purpose of radio resource allocation, the UE is requested by the network to perform measurement on external radio environments, such that information like radio resource quality and noise condition are reported to the network as reference for radio resource management. When performing inter-frequency measurement or inter-RAT (acronym of Radio Access Technology) measurement, the UE is required to switch to other frequencies for measurement and thus cannot stay on the current frequency for data transfer operation. Under such a situation, the network would configure a measurement gap for the UE to perform the inter-frequency measurement or the inter-RAT measurement. During the measurement gap, both uplink and downlink transmissions are prohibited.

However, the 3rd Generation Partnership Project (3GPP) has started to work out a next generation of the LTE system: the LTE Advanced (LTE-A) system, to meet future requirements of all kinds of communication services. Carrier aggregation, where two or more component carriers are aggregated, is introduced into the LTE-A system in order to support wider transmission bandwidths, e.g. up to 100MHz and for spectrum aggregation. A UE of the LTE-A system utilizes multiple component carriers instead of a single carrier used in the former LTE system, to establish multiple links for receiving or transmitting on each component carrier.

At present, the characteristics of carrier aggregation are quoted as below:
(1) Supporting carrier aggregation for both contiguous and non-contiguous component carriers.
(2) The aggregated number of component carriers in the uplink (UL) and the downlink (DL) can be different. For backward-compatible configuration, the aggregated numbers of component carriers in the UL and the DL should be the same.
(3) It is possible to configure a UE to aggregate a different number of component carriers in the UL and the DL to obtain different bandwidths.
(4) From a UE perspective, there is one transport block and one hybrid-ARQ (HARQ) entity per scheduled component carrier.

Besides, the 3GPP document R2-093599 summarizes the design of radio access network regarding Carrier Aggregation. It concludes that there is one dedicated and independent HARQ entity per component carrier and there is no static mapping between HARQ entities and logical channels, i.e. data from one logical channel can be transmitted on any available component carrier.

Form the above, once carrier aggregation is supported, it is expected that multiple transceivers are needed in a UE for performing data transfer on multiple component carriers. Thus, it is possible for the UE to perform measurement via one receiver while data transfer via other transceivers can still proceed at the same time. However, in the prior arts, the behaviors of the network and the UE during the measurement gap are not specifically defined under the carrier aggregation technology. Under such a situation, the component carriers may not be scheduled by the network during the measurement gap, causing lower data rate for UE transmission and reception. This situation can be improved.

This in mind, the present invention aims at providing a method and apparatus for performing measurement gap configuration in a wireless communication system, so as to support carrier aggregation.

This is achieved by a method and apparatus for measurement gap configuration in a network terminal of a wireless communication system according to the pre-characterizing clauses of claims 1 and 2, and by a method and apparatus for measurement gap configuration in a user equipment (UE) of a wireless communication system according to the pre-characterizing clauses of claims 11 and 12. The dependent claims pertain to corresponding further developments and improvements.

As will be seen more clearly from the detailed description following below, the claimed method for measurement gap configuration in a network terminal of a wireless communication system includes steps of configuring at least one downlink component carriers to a user equipment (UE) of the wireless communication system; and indicating a first downlink component carrier of the at least one downlink component carriers to be associated with a measurement gap when configuring the measurement gap to the UE.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of program code of FIG.2.
FIG.4 is a flowchart of a process according to an embodiment of the present invention.
FIG.5 is a flowchart of a process according to another embodiment of the present invention.

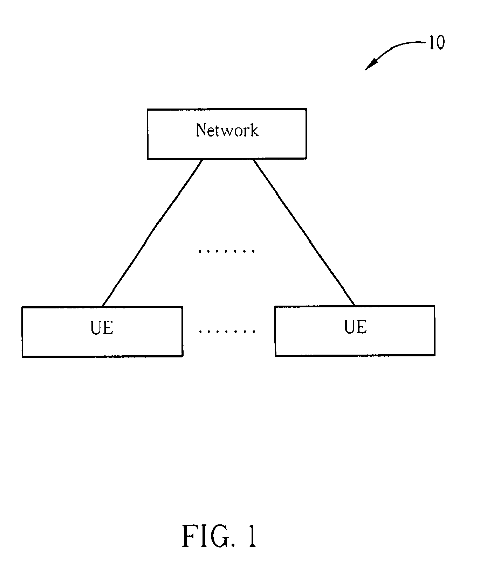

Please refer to FIG.1, which illustrates a schematic diagram of a wireless communications system 10. The wireless communications system 10 is preferred to be an LTE-advanced (LTE-A) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

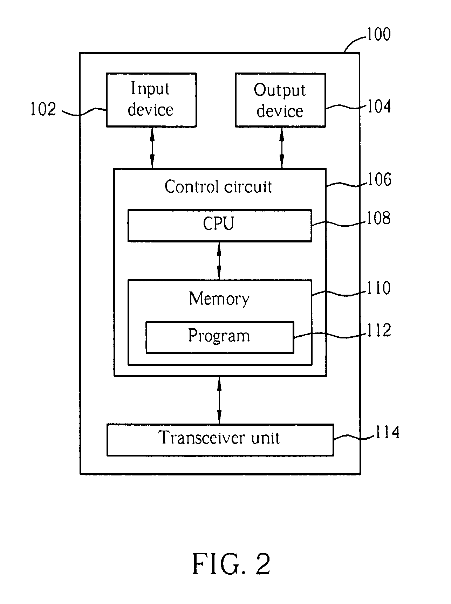

Please refer to FIG.2, which is a functional block diagram of a communications device 100 in a wireless communications system. The communications device 100 can be utilized for realizing the UEs or the network in FIG 1. For the sake of brevity, FIG.2 only shows an input device 102, an output device 104, a control circuit 106, a central processing unit (CPU) 108, a memory 110, a program 112, and a transceiver unit 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver unit 114 is used to receive and transmit wireless signals, delivering received signals to the control circuit 106, and outputting signals generated by the control circuit 106 wirelessly. From a perspective of a communications protocol framework, the transceiver unit 114 can be seen as a portion of Layer 1, and the control circuit 106 can be utilized to realize functions of Layer 2 and Layer 3.

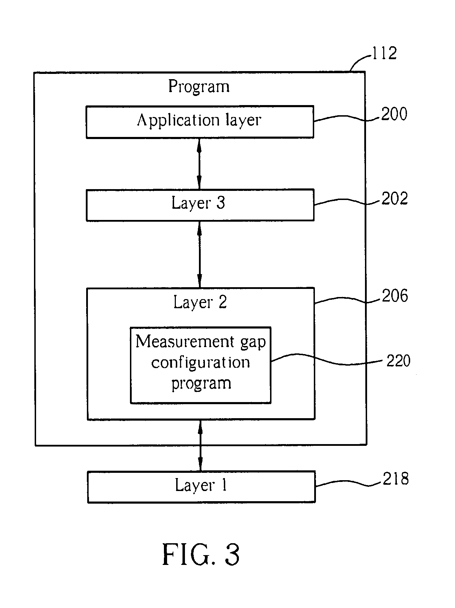

Please continue to refer to FIG.3. FIG.3 is a diagram of the program 112 shown in FIG.2. The program 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In the LTE-A system, the program 112 supports Carrier Aggregation technology, by which the UE is able to perform data transfer simultaneously on multiple network-configured component carriers. In addition, the Layer 1 218 is required to perform a measurement procedure, which includes performing inter-frequency measurement or inter-RAT measurement according to a measurement gap configured by the network. In such a situation, the embodiment of the present invention provides a measurement gap configuration program 220 in the program 112, for performing measurement gap configuration on the UE and the network under carrier aggregation, so as to enhance system scheduling efficiency.

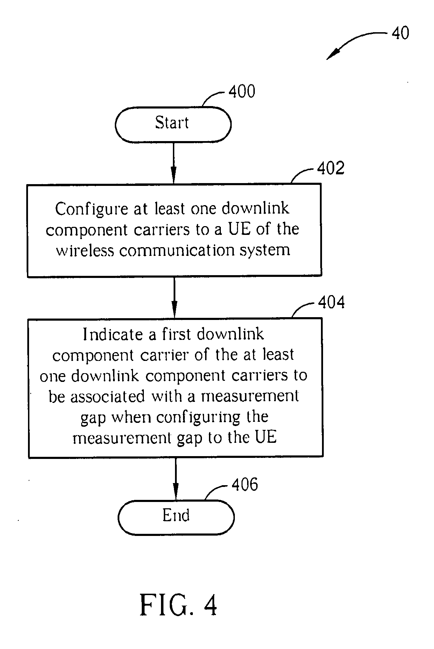

Please refer to FIG.4, which illustrates a schematic diagram of a process 40. The process 40 is utilized for performing measurement gap configuration in a network terminal of the wireless communications system 10, and can be compiled into the measurement gap configuration program 220. The process 40 includes the following steps:
Step 400: Start.
Step 402: Configure at least one downlink component carriers to a UE of the wireless communication system.
Step 404: Indicate a first downlink component carrier of the at least one downlink component carriers to be associated with a measurement gap when configuring the measurement gap to the UE.
Step 406: End.

According to the process 40, when the amount of data to be transmitted to the UE is large, the network may configure at least one downlink component carriers to the UE via a Radio Resource Control (RRC) message such as an RRC Connection Reconfiguration message, for example, such that the UE is able to perform data reception on the configured downlink component carriers. Meanwhile, the network may also configure at least one uplink component carriers to the UE via this message, for allowing the UE to perform data transmission on the configured uplink component carriers.

Then, when configuring a measurement gap to the UE, the network shall indicate a first downlink component carrier of the at least one downlink component carriers to be associated with the measurement gap. Indicating the first downlink component carrier to be associated with the measurement gap means that the UE is indicated to perform measurement via a receiver assigned to the first downlink component carrier during the measurement gap. In other words, the UE is prohibited from performing DL-SCH reception on the first downlink component carrier during the measurement gap; meanwhile, the UE is also prohibited from performing UL-SCH transmission on a first uplink component carrier that shares a transceiver with the first downlink component carrier. Note that, the shared transceiver contains a transmitter assigned to the first uplink component carrier and the receiver assigned to the first downlink component carrier.

Therefore, once the carrier aggregation is activated, by indicating the downlink component carrier associated with the measurement gap, the UE is allowed to perform measurement via one receiver while data transfer via other transceivers can still proceed at the same time. As a result, the component carriers associated with the other transceivers can still be scheduled by the network during the measurement gap, so that the data rate for UE transmission and reception is enhanced.

Please note that, configurations of the at least one downlink component carriers and the measurement gap can be performed via a same RRC message, or via RRC messages sent at different times, which both belongs to the scope of the present invention. The said RRC message can be, but is not limited to, an RRC Connection Reconfiguration message.

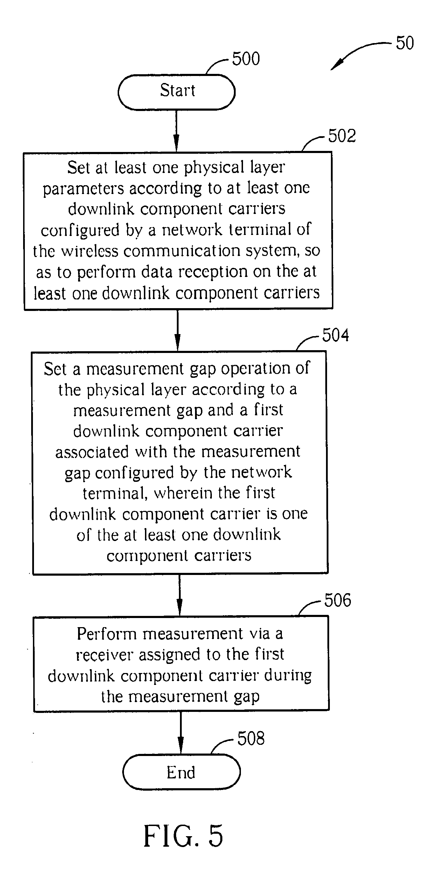

On the other hand, the embodiment of the present invention also provides related operations for the UE to configure the measurement gap, in order to have the behaviors between the network and the UE be coordinated. Please refer to FIG.5, which illustrates a schematic diagram of a process 50. The process 50 is utilized for performing measurement gap configuration in a UE of the wireless communications system 10, and can be compiled into the measurement gap configuration program 220. The process 50 includes the following steps:
Step 500: Start.
Step 502: Set at least one physical layer parameters according to at least one downlink component carriers configured by a network terminal of the wireless communication system, so as to perform data reception on the at least one downlink component carriers.
Step 504: Set a measurement gap operation of the physical layer according to a measurement gap and a first downlink component carrier associated with the measurement gap configured by the network terminal, wherein the first downlink component carrier is one of the at least one downlink component carriers.
Step 506: Perform measurement via a receiver assigned to the first downlink component carrier during the measurement gap
Step 508: End.

According to the process 50, when the carrier aggregation is activated, the network would configure at least one downlink component carriers to the UE via a Radio Resource Control (RRC) message such as an RRC Connection Reconfiguration message, for example. Then, the UE assigns the network-configured downlink component carriers to associated transceivers and sets at least one physical layer parameters of Physical Downlink Shared Channel (PDSCH) Configuration, such that the UE is able to perform data reception on the configured downlink component carriers. That is to say, the UE can perform DL-SCH reception on the at least one downlink component carriers via receivers of the at least one transceivers, respectively. Meanwhile, the network may also configure at least one uplink component carriers to the UE via this message, for allowing the UE to perform data transmission on the configured uplink component carriers. That means, the UE would assign the uplink component carriers to the transceivers, and perform UL-SCH transmission on the at least one uplink component carriers via transmitters of the at least one transceivers.

Once being configured a measurement gap when necessary to perform inter-frequency measurement or inter-RAT measurement, the UE would set the physical layer measurement gap operation according to instructions within an RRC message sent by the network, and associate the measurement gap with a first downlink component carrier of the at least one downlink component carriers. Under such a situation, the UE would perform measurement via a receiver assigned to the first downlink component carrier during the measurement gap. In other words, the UE is prohibited from performing DL-SCH reception on the first downlink component carrier during the measurement gap. Meanwhile, the UE is also prohibited from performing UL-SCH transmission on an uplink component carrier that shares a transceiver with the first downlink component carrier. Note that, the shared transceiver contains a transmitter assigned to the uplink component carrier and the receiver assigned to the first downlink component carrier.

Therefore, when the carrier aggregation is activated, by indicating the downlink component carrier associated with the measurement gap, the UE is allowed to perform measurement via one receiver while data transfer via other transceivers can still proceed at the same time. As a result, the component carriers associated with the other transceivers can still be scheduled by the network during the measurement gap, so that the data rate for UE transmission and reception is enhanced.

In summary, when performing measurement gap configuration under carrier aggregation, the network indicates the UE the component carrier associated with the measurement gap, and thus is able to keep scheduling on other component carriers. In addition, the behaviors between the UE and the network are coordinated by this method.

## Claims

1. A method for measurement gap configuration in a network terminal of a wireless communication system, the method comprising:
configuring at least one downlink component carriers to a user equipment,
named UE hereinafter, of the wireless communication system (402); and **characterized by** indicating a first downlink component carrier of the at least
one downlink component carriers to be associated with a measurement gap when configuring the measurement gap to the UE (404).

2. A communication device (100) for measurement gap configuration in a network terminal of a wireless communication system, the communication device (100) comprising:
a processor (108) for executing a program (112); and
a memory (110) coupled to the processor (108) for storing the program (112); the program (112) comprising:
configuring at least one downlink component carriers to a user equipment,
named UE hereinafter, of the wireless communication system (402); and
**characterized by** indicating a first downlink component carrier of the at
least one downlink component carriers to be associated with a measurement gap when configuring the measurement gap to the UE (404).

3. The method of claim 1 or the communication device (100) of claim 2, **characterized in that** the at least one downlink component carriers are configured to the UE for performing Downlink Shared Channel, named DL-SCH hereinafter, reception.

4. The method of claim 1 or the communication device (100) of claim 2, **characterized in that** indicating the first downlink component carrier to be associated with the measurement gap is indicating the UE to perform measurement via a receiver assigned to the first downlink component carrier during the measurement gap.

5. The method of claim 4 or the communication device (100) of claim 4, **characterized in that** the UE performs inter-frequency measurement or inter-RAT, acronym of Radio Access Technology, measurement during the measurement gap.

6. The method of claim 4 or the communication device (100) of claim 4, **characterized in that** the UE is prohibited from performing DL-SCH reception on the first downlink component carrier during the measurement gap.

7. The method of claim 6 or the communication device (100) of claim 6, **characterized in that** the UE keeps performing DL-SCH reception on other downlink component carriers than the first downlink component carrier during the measurement gap.

8. The method of claim 4 or the communication device (100) of claim 4, **characterized in that** the UE is prohibited from performing Uplink Shared Channel, named UL-SCH hereinafter, transmission on a first uplink component carrier that shares a transceiver with the first downlink component carrier, wherein the transceiver contains a transmitter assigned to the first uplink component carrier and the receiver assigned to the first downlink component carrier.

9. The method of claim 8 or the communication device (100) of claim 4, **characterized in that** the UE keeps performing UL-SCH transmission on other uplink component carriers than the first uplink component carrier during the measurement gap.

10. The method of claim 1 or the communication device (100) of claim 2, **characterized in that** configurations of the at least one downlink component carriers and the measurement gap are performed via a same Radio Resource Control, named RRC hereinafter, message, the RRC message being an RRC Connection Reconfiguration message; or
**characterized in that** configurations of the at least one downlink component carriers and the measurement gap are sequentially performed via Radio Resource Control, named RRC hereinafter, messages, both the RRC messages being an RRC Connection Reconfiguration message.

11. A method for measurement gap configuration in a user equipment, named UE hereinafter, of a wireless communication system, the method comprising:
setting at least one physical layer parameters according to at least one downlink
component carriers configured by a network terminal of the wireless communication system, so as to perform data reception on the at least one downlink component carriers (502);
**characterized by** setting a measurement gap operation of the physical layer
according to a measurement gap and a first downlink component carrier associated with the measurement gap configured by the network terminal, wherein the first downlink component carrier is one of the at least one downlink component carriers (504); and
performing measurement via a receiver assigned to the first downlink
component carrier during the measurement gap (506).

12. A communication device (100) for measurement gap configuration in a user equipment, named UE hereinafter, of a wireless communication system, the communication device (100) comprising:
a processor (108) for executing a program (112); and
a memory (110) coupled to the processor (108) for storing the program (112);
the program (112) comprising:
setting at least one physical layer parameters according to at least one
downlink component carriers configured by a network terminal of the wireless communication system, so as to perform data reception on the at least one downlink component carriers (502);
**characterized by** setting a measurement gap operation of the physical
layer according to a measurement gap and a first downlink component carrier associated with the measurement gap configured by the network terminal, wherein the first downlink component carrier is one of the at least one downlink component carriers (504); and
performing measurement via a receiver assigned to the first downlink
component carrier during the measurement gap (506).

13. The method of claim 11 or the communication device (100) of claim 12, **characterized in that** the at least one physical layer parameters each contain a Physical Downlink Shared Channel, named PDSCH hereinafter, Configuration; or
**characterized in that** the UE performs inter-frequency measurement or inter-RAT, acronym of Radio Access Technology, measurement during the measurement gap.

14. The method of claim 11 or the communication device (100) of claim 12, **characterized in that** performing data reception on the at least one downlink component carriers is performing Downlink Shared Channel, named DL-SCH hereinafter, reception on the at least one downlink component carriers.

15. The method of claim 16 or the communication device (100) of claim 14, **characterized in that** the UE is prohibited from performing DL-SCH reception on the first downlink component carrier during the measurement gap.

16. The method of claim 17 or the communication device (100) of claim 15, **characterized in that** the UE keeps performing DL-SCH reception on other downlink component carriers than the first downlink component carrier during the measurement gap.

17. The method of claim 11 or the communication device (100) of claim 12, **characterized in that** the UE is prohibited from performing Uplink Shared Channel, named UL-SCH hereinafter, transmission on a first uplink component carrier that shares a transceiver with the first downlink component carrier, wherein the transceiver contains a transmitter assigned to the first uplink component carrier and the receiver assigned to the first downlink component carrier.

18. The method of claim 17 or the communication device (100) of claim 17, **characterized in that** the UE keeps performing UL-SCH transmission on other uplink component carriers than the first uplink component carrier during the measurement gap.

19. The method of claim 11 or the communication device (100) of claim 12, **characterized in that** configurations of the at least one downlink component carriers and the measurement gap are performed via a same Radio Resource Control, named RRC hereinafter, message, the RRC message being an RRC Connection Reconfiguration message; or
**characterized in that** configurations of the at least one downlink component carriers and the measurement gap are sequentially performed via Radio Resource Control, named RRC hereinafter, messages, both the RRC messages being an RRC Connection Reconfiguration message.
